# EUROPEAN PATENT SPECIFICATION

(11) **EP 2 410 161 B1**
(45) Date of publication and mention of the grant of the patent: **25.09.2013**
(21) Application number: 10753325.9
(22) Date of filing: 15.01.2010
(51) Int. Cl.: F02D 41/38, F02D 21/08, F02D 41/02, F02D 41/08

(54) **CONTROL DEVICE AND CONTROL METHOD FOR INTERNAL COMBUSTION ENGINE**
STEUERVORRICHTUNG UND STEUERVERFAHREN FÜR EINEN VERBRENNUNGSMOTOR
DISPOSITIF ET PROCEDE DE COMMANDE POUR MOTEUR A COMBUSTION INTERNE

(30) Priority: 17.03.2009 JP 2009064747
(43) Date of publication of application: 25.01.2012
(73) Proprietor: Honda Motor Co., Ltd., Minato-ku Tokyo 107-8556 (JP)
(72) Inventor: NAJIMA, Shinji, Wako-shi, Saitama 351-0193 (JP); MAEKAWA, Kouichi, Wako-shi Saitama 351-0193 (JP)
(74) Representative: Trossin, Hans-Jürgen
(86) International application number: PCT/JP2010/050385
(87) International publication number: WO 2010/106830

(56) References cited:
- EP-A1- 1 001 153
- JP-A- 10 103 119
- JP-A- 58 117 347
- JP-A- 61 286 568
- JP-A- 2001 090 595
- JP-A- 2005 090 280
- JP-A- 2006 226 188
- JP-A- 2008 075 565

## Description

### Technical Field

The present invention relates to a control device and a control method for an internal combustion engine provided with an exhaust gas recirculation mechanism.

### Background Art

There has been known an EGR mechanism configured to perform an Exhaust Gas Recirculation (hereinafter, referred to as EGR) which recirculates exhaust gas to an intake air system of an internal combustion engine. The EGR mechanism mixes a part of the exhaust gas to fresh air to lower oxygen concentration in intake air. Thereby, the intake air combusts at a state in which the oxygen concentration is lower than the atmosphere, and as a result thereof, the peak combustion temperature is lowered, which makes it possible to inhibit the generation of nitrogen oxides (NOX).

In an idling operation of the internal combustion engine, it is possible to inhibit the generation of nitrogen oxides by performing the EGR. However, if the idling state continues for a long time, carbons will adhere to an injection port of a fuel injection nozzle due to EGR to choke the injection port gradually. Accordingly, the fuel injection is difficult to be performed perfectly and the combustion becomes unstable, which may causes a rough idle or an engine stall. Therefore, in conventional arts, if the idling state continues over a predefined time to fall into a long idling state, EGR is stopped (for example, refer to Japanese Patent Laid-open No. H10-103119).

The amount of EGR is rich by nature in the idling operation, and so is the amount of emission of hydrocarbons (HC). Further, in addition to hydrocarbons, if low combustion temperature and condensed water are included, the three factors will make an environment for tar to be generated easily. If the idling state continues for a long time, the generated tar continues to adhere to the surface of EGR valve. Thereby, if the internal combustion engine is stopped under this situation, the EGR valve will be closed with a great mount of tar adhered to the surface. Afterwards, if the internal combustion engine cools down, the tar will solidify to stick the EGR valve consequently. Thus, merely for protecting the EGR valve, EGR will be stopped in the long idling state.

### Summary of the Invention

### Problems to Be Solved by the Invention

However, it has been understood that combustion noise will become worse if EGR is stopped in the long idling state. The fuel injection control remains the same before or after the stop of EGR, and so does the intake air flow; however, after the stop of EGR, the intake air is completely introduced from the atmosphere, thus, the oxygen concentration in the intake air becomes high, which accelerates the combustion speed. Thereby, rapid combustion occurs, and it has been considered the reason to make worse the combustion noise.

The present invention has been accomplished in view of the aforementioned problems, and it is therefore an object of the present invention to provide a control device and a control method for an internal combustion engine capable of inhibiting combustion noise from becoming worse when EGR is stopped in a long idling state.

### Means for Solving the Problems

A control device for an internal combustion engine according to the present invention comprises: an exhaust gas recirculation mechanism configured to recirculate exhaust gas to an intake air system of the internal combustion engine; a fuel injection unit configured to inject fuel into a combustion chamber of the internal combustion engine; a fuel injection controller configured to control the fuel injection performed by the fuel injection unit; and an exhaust gas recirculation stop unit configured to stop the operation of the exhaust gas recirculation mechanism when an idling operation of the internal combustion engine continues for a predefined time, when the exhaust gas recirculation stop unit has stopped the operation of the exhaust gas recirculation mechanism, the fuel injection controller increases the number of times of the fuel injection performed by the fuel injection unit.

According to the control device for the internal combustion engine of the present invention, when the idling operation of the internal combustion engine continues for the predefined time and the operation of the exhaust gas recirculation mechanism is stopped, the number of times of the fuel injection by the fuel injection unit is increased. When the operation of the exhaust gas recirculation mechanism is stopped, the intake air is of fresh air completely, the oxygen in the intake air increases. Therefore, compared with the conventional art in which the fuel injection control remains unchanged even though the exhaust gas recirculation mechanism has been stopped, it is possible for the present invention to prevent the combustion speed from increasing, thereby, to inhibit the combustion noise from becoming worse.

In the control device for the internal combustion engine of the present invention, for example, when the exhaust gas recirculation stop unit has stopped the operation of the exhaust gas recirculation mechanism, it is preferable that the fuel injection controller applies a preparatory fuel injection performed by the fuel injection unit before a primary fuel injection. The number of times for applying the preparatory fuel injection may be set in consideration of inhibition effects such as inhibiting the combustion noise from becoming worse, and it may be one time or plural times.

In the control device for the internal combustion engine of the present invention, when the exhaust gas recirculation stop unit has stopped the operation of the exhaust gas recirculation mechanism, it is preferable that the fuel injection controller splits the primary fuel injection performed by the fuel injection unit.

In the control device for the internal combustion engine of the present invention, when the exhaust gas recirculation stop unit has stopped the operation of the exhaust gas recirculation mechanism, it is preferable that the fuel injection controller applies a post fuel injection performed by the fuel injection unit after the primary fuel injection. The number of times for applying the post fuel injection may be set in consideration of inhibition effects such as inhibiting the combustion noise from becoming worse, and it may be one time or plural times.

The present invention provides a control method for an internal combustion engine which is provided with an exhaust gas recirculation mechanism configured to recirculate exhaust gas to an intake air system of the internal combustion engine; a fuel injection unit configured to inject fuel into a combustion chamber of the internal combustion engine; and an exhaust gas recirculation stop unit configured to stop the operation of the exhaust gas recirculation mechanism when an idling operation of the internal combustion engine continues for a predefined time, when the exhaust gas recirculation stop unit has stopped the operation of the exhaust gas recirculation mechanism, the number of times of the fuel injection performed by the fuel injection unit is increased.

According to the control method for the internal combustion engine of the present invention, when the idling operation of the internal combustion engine continues for the predefined time and the operation of the exhaust gas recirculation mechanism is stopped, the number of times of the fuel injection by the fuel injection unit is increased. When the operation of the exhaust gas recirculation mechanism is stopped, the intake air is of fresh air completely, the oxygen in the intake air increases. Therefore, compared with the conventional art in which the fuel injection control remains unchanged even though the exhaust gas recirculation mechanism has been stopped, it is possible for the present invention to prevent the combustion speed from increasing, thereby, to inhibit the combustion noise from becoming worse.

In the control method for the internal combustion engine of the present invention, for example, when the exhaust gas recirculation stop unit has stopped the operation of the exhaust gas recirculation mechanism, it is preferable that the fuel injection controller applies a preparatory fuel injection performed by the fuel injection unit before a primary fuel injection. The number of times for applying the preparatory fuel injection may be set in consideration of inhibition effects such as inhibiting the combustion noise from becoming worse, and it may be one time or plural times.

In the control method for the internal combustion engine of the present invention, when the exhaust gas recirculation stop unit has stopped the operation of the exhaust gas recirculation mechanism, it is preferable that the fuel injection controller splits the primary fuel injection performed by the fuel injection unit.

In the control method for the internal combustion engine of the present invention, when the exhaust gas recirculation stop unit has stopped the operation of the exhaust gas recirculation mechanism, it is preferable that the fuel injection controller applies a post fuel injection performed by the fuel injection unit after the primary fuel injection. The number of times for applying the post fuel injection may be set in consideration of inhibition effects such as inhibiting the combustion noise from becoming worse, and it may be one time or plural times.

### Brief Description of the Drawings

Fig. 1 is a configuration diagram illustrating an internal combustion engine according to an embodiment of the present invention;
Fig. 2 is a block diagram illustrating a control device of the internal combustion engine; and
Fig. 3 is a flow chart illustrating an operation of the internal combustion engine.

### Mode for Carrying Out the Invention

An embodiment of the present invention will be described with reference to the drawings.

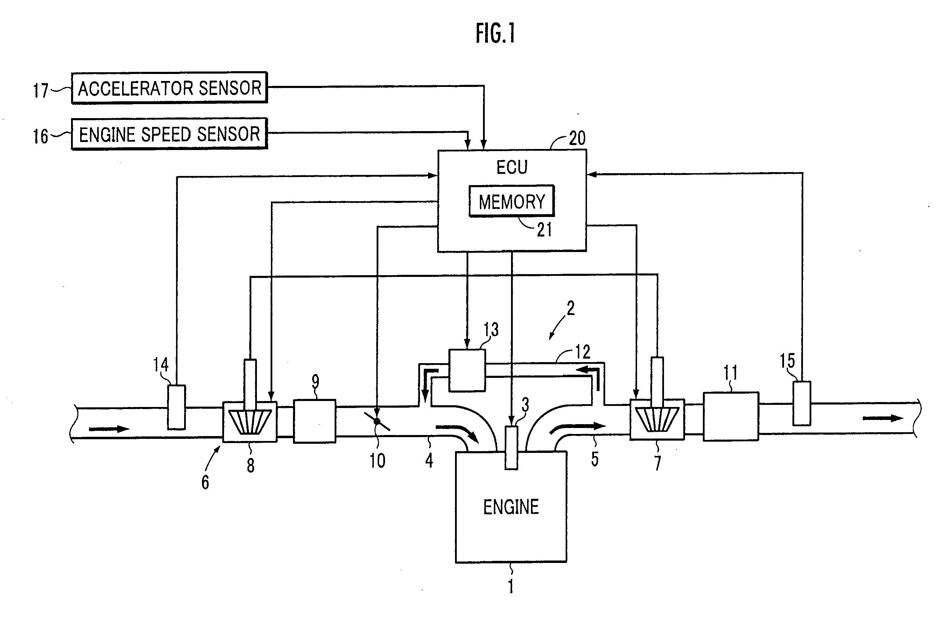

With reference to Fig. 1, an engine 1, namely an internal combustion engine is provided with an EGR mechanism (an exhaust air recirculation mechanism) 2. The EGR mechanism 2 recirculates a part of exhaust air from the engine 1 to an intake air system thereof.

The engine 1 is a diesel engine which injects fuel directly into cylinders, and each of the cylinders is disposed with a fuel injection valve (injector) 3. Although not shown specifically in the drawings, the fuel injection valve 3 is connected to a high pressure pump via a common rail. The fuel in a fuel tank is pressurized in the high pressure pump, transferred to the fuel injection valve 3 via the common rail, and injected into a cylinder from the fuel injection valve 3.

The engine 1 is provided with an intake pipe 4 for providing intake air (inhaling air) to the cylinder and an exhaust pipe 5 for discharging exhaust gas from the cylinder.

The intake pipe 4 is disposed with a supercharger 6. The supercharger 6 is provided with a turbine 7 which is driven by the kinetic energy of the exhaust gas from the engine 1 and a compressor 8 which is rotatably driven by the turbine 7 for compressing the intake air. The turbine 7 is provided with a variable vane (not shown) and is configured to regulate supercharge pressure by varying the opening degree of the variable vane.

The downstream side of the compressor 8 of the intake pipe 4 is disposed with an intercooler 9 and an intake shutter (throttle valve) 10. The intercooler 9 cools down the compressed air. The intake shutter 10 regulates the flow of intake air, namely the fresh air, from the atmosphere by varying the opening degree of shutter.

Meanwhile, the downstream of the turbine 7 of the exhaust pipe 5 is disposed with a catalyst converter 11 for purifying the exhaust gas.

The EGR mechanism 2 is composed of an EGR passage (exhaust gas recirculation passage) 12 for recirculating the exhaust gas to the intake pipe 4 and an EGR valve (exhaust gas recirculation control valve) 13 disposed in the EGR passage 12. The EGR passage 12 is disposed between the upstream side of the turbine 7 of the exhaust pipe 5 and the downstream side of the intake shutter 10 of the intake pipe 4. The EGR valve 13 regulates the EGR flow (flow of the recirculated exhaust gas) by varying the opening degree of the valve.

The upstream of the supercharger 6 of the intake pipe 4 is disposed with an intake air flow sensor 14 for detecting an intake air flow of the engine 1. The exhaust pipe 5 is disposed with a Linear Air Fuel Ratio Sensor (hereinafter, referred to as LAF sensor) 15 at the immediate upstream of the catalyst converter 11. The LAF sensor 15 outputs an output value α substantially proportional to an air fuel ratio of the exhaust gas from the engine 1.

There are also disposed an engine speed sensor 16 for detecting a speed of rotation Ne of the engine 1 and an accelerator sensor 17 for detecting an accelerator opening degree (depressed amount of accelerator) L of an accelerator pedal (not shown).

Further, there is disposed an electronic control unit (hereinafter, referred to as ECU) 20 composed of a central processing unit (hereinafter, referred to as CPU, not shown) and the like. The ECU 20 comprises an input circuit (not shown) having functions such as shaping input signal waves from each of the sensors 14 to 17, correcting a voltage level to a predefined level, converting analogue signal value to digital signal value and the like, the fuel injection valve 3, the turbine 7, the intake shutter 10, and an output circuit (not shown) for transmitting control signals to the EGR valve 13. Moreover, the ECU 20 comprises a memory 21 for storing various arithmetic programs to be executed in the CPU, arithmetic results thereof and the like.

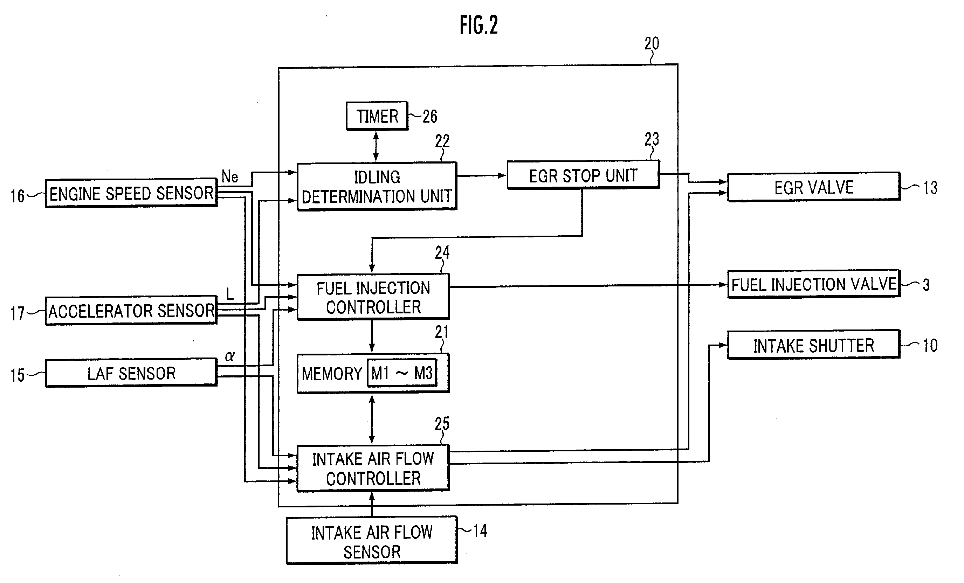

With reference to Fig. 2, the memory 21 is stored with a map M1 for an injection pressure, an injection time and an injection timing (hereinafter, generally referred to as the injection pattern) FP1 of the fuel injection valve 3 defined according to the engine speed of rotation Ne, the accelerator opening degree L, the output value α from the LAF sensor 15 and the like in a state other than the long idling state (hereinafter, referred to as a normal state) and a map M2 for an injection pattern FP2 of the fuel injection valve 3 defined according to the engine speed of rotation Ne, the output value α from the LAF sensor 15 and the like in the long idling state.

When the injection pattern FP1 of the map M1 and the injection pattern FP2 of the map M2 are compared under the condition that the engine speed of rotation Ne and output value α from the LAF sensor 15 are identical and the accelerator opening degree L is equal to zero for both maps, the number of times of preparatory fuel injection (pilot injection or pre-injection) for the injection pattern FP2 is increased by at least one time as compared with the injection pattern FP1.

The preparatory fuel injection is intended to inject a small amount of fuel before a normal fuel injection (primary fuel injection or main injection) for preliminary combustion. By the preparatory fuel injection, small amount of fuel bums due to the rising of temperature in the combustion chamber which is caused by the uprising of a piston, and by this preliminary combustion, the temperature in the combustion chamber decreases, which promotes the diffusion of fuel injected by the primary fuel injection. Thereby, the ignition delay time from the fuel injection to the ignition is shortened and the primary combustion is stabilized to have a slow combustion speed, which makes it possible to inhibit the combustion noise. Moreover, by performing another preparatory fuel injection immediately before the preparatory fuel injection, the combustion of fuel by the immediately following preparatory fuel injection can be stabilized. Similarly in this case, it is also possible to inhibit the combustion noise. Further, by increasing the number of times of the preparatory fuel injection, it is possible to inhibit the generation of nitrogen oxides.

For example, if the injection pattern FP1 in the map M1 is defined to have no preparatory fuel injection, then, the injection pattern FP2 in the map M2 will be defined to have the preparatory fuel injection of at least 1 time. If the injection pattern FP1 in the map M1 is defined to have the preparatory fuel injection of 1 time (single pilot), then, the injection pattern FP2 in the map M2 will be defined to have the preparatory fuel injection of at least 2 times, for example, have the preparatory fuel injection of 2 times (double pilot) or to have the preparatory fuel injection of 3 times (triple pilot).

The memory 21 is also stored with a desired intake air flow defined according to the engine speed of rotation Ne, the accelerator opening degree L, the output value α from the LAF sensor 15 and the like, a map M3 of opening degrees of the EGR valve 13 and the like. It should be noted that it is acceptable to store a table in the memory 21 in place of a map.

The ECU 20 includes an idling determination unit 22, an EGR stop unit 23, a fuel injection controller 24, an intake air flow controller 25, and a timer 26 as functional processing units.

The idling determination unit 22 is configured to determine whether or not the engine 1 is in an idling state. The idling determination unit 22 determines that the engine 1 is in the idling state if the speed of rotation Ne of the engine 1 is no greater than a predefined speed of rotation and the accelerator opening degree L thereof is equal to zero. If the idling state of the engine 1 continues over a predefined time T, for example 10 minutes or 1 hour, the idling determination unit 22 determines that the engine 1 is in the long idling state. The time is counted by the timer 26.

The EGR stop unit 23 stops the operation of the EGR mechanism 2 by closing the EGR valve 13 when the idling determination unit 22 has determined that the engine 1 is in the long idling state.

The fuel injection controller 24 is configured to control fuel injection from the fuel injection valve 3. In the normal state, the fuel injection controller 24 acquires the engine speed of rotation Ne, the accelerator opening degree L, the output value α from the LAF sensor 15 and the like at present time, searches in the map M1 the injection pattern FP1 corresponding to the acquired data, and controls the fuel injection from the fuel injection valve 3 according to the injection pattern FP1. On the other hand, in the long idling state, the fuel injection controller 24 acquires the engine speed of rotation Ne and the output value α from the LAF sensor 15 at present time, searches in the map M2 the injection pattern FP2 corresponding to the acquired data, and controls the fuel injection from the fuel injection valve 3 according to the injection pattern FP2.

Accordingly, when the engine 1 falls into the long idling state and the EGR is stopped, the fuel injection controller 24 controls the fuel injection from the fuel injection valve 3 according to the injection pattern FP2 in which the number of times of the preparatory fuel injection is increased by at least one time as compared with the injection pattern FP1 used before the stop of EGR.

The intake air flow controller 25 acquires the engine speed of rotation Ne, the accelerator opening degree L, the output value α from the LAF sensor 15 and the like at present time, searches in the map M3 the desired intake air flow corresponding to the acquired data, and performs a feedback control on the shutter opening degree of the intake shutter 10, the opening degree of the EGR valve 13 and the like so as to match the intake air flow detected by the intake air flow sensor 14 with the desired intake air flow.

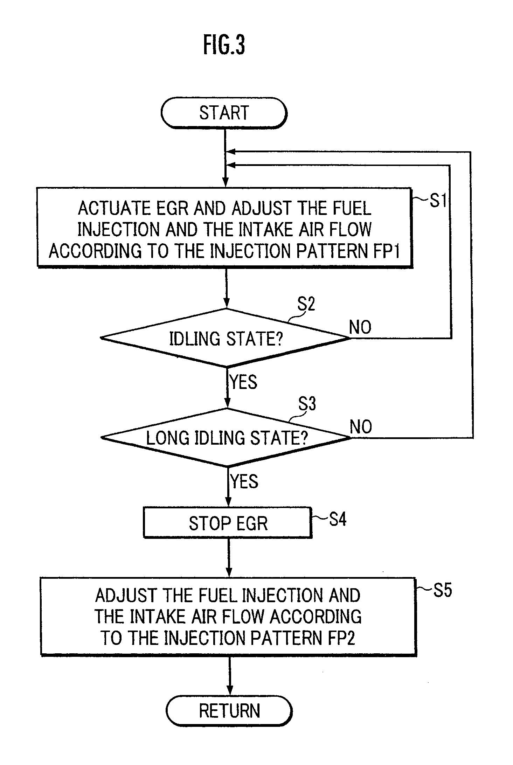

Hereinafter, with reference to the flowchart illustrated in Fig. 3, the operation of the control device for the engine 1 will be described.

First, the adjusting of the intake air flow is performed when the EGR mechanism 2 is in operation (S1). The intake air flow sensor 14 detects the intake air flow of the engine 1, the LAF sensor 15 detects the sensor value α, and the engine speed sensor 16 detects the engine speed of rotation Ne. The fuel injection controller 24 searches in the map M1 the injection pattern FP1 of the fuel injection valve 3 corresponding to the detection values, and controls the fuel injection from the fuel injection valve 3 according to the injection pattern FP1. The intake air flow controller 25 searches in the map T3 the desired intake air flow corresponding to the detection values and performs the feedback control on the shutter opening degree of the intake shutter 10, the opening degree of the EGR valve 13 and the like so as to match the intake air flow detected by the intake air flow sensor 14 with the desired intake air flow.

Subsequently, the idling determination unit 22 determines whether or not the engine 1 is in the idling state (S2). If it is determined that the engine 1 is in the idling state (S2: YES), then the idling determination unit 22 determines whether or not the engine 1 is in the long idling state (S3). If it is determined that the engine 1 is in the long idling state (S3: YES), the EGR stop unit 23 stops the operation of the EGR mechanism 2 (S4).

Thereafter, the fuel injection controller 24 searches in the map M2 the injection pattern FP2 of the fuel injection valve 3 corresponding to the detection values at present time, and controls the fuel injection from the fuel injection valve 3 according to the injection pattern FP2 (S5).

As described in the above, when the engine 1 falls into the long idling state (S3: YES) and the EGR has been stopped (S4), the fuel injection controller 24 controls the fuel injection from the fuel injection valve 3, according to the injection pattern FP2, such that the number of times of the preparatory fuel injection is increased by at least one time as compared with the injection pattern FP1 used before the stop of EGR (S5). Therefore, compared with the conventional art in which the fuel injection control remains unchanged even though the EGR has been stopped, it is possible for the present invention to inhibit the combustion noise from becoming worse. Furthermore, it is possible to inhibit the generation of nitrogen oxides in comparison to the conventional art.

It should be noted that the present invention is not limited to the embodiment described in the above. For example, in the embodiment, the engine 1 is described as a diesel engine; however, it is acceptable for the engine 1 to be a gasoline engine.

It has been described that the number of times of preparatory fuel injection for the injection pattern FP2 is increased by at least one time when the injection patterns FP1 and FP2 of the maps M1 and M2 are compared under the condition that the engine speed of rotation Ne and output value α from the LAF sensor 15 are identical and the accelerator opening degree L is equal to zero. However, it is acceptable to split one primary fuel injection in the injection pattern FP1 into at least two primary fuel injections in the injection pattern FP2. In this case, similar to the case of increasing the preparatory fuel injection, it is also possible to inhibit the combustion noise from becoming worse.

If there is no post fuel injection (after injection) in the injection pattern FP1, it is acceptable to apply a post fuel injection in the injection pattern FP2. The post fuel injection is intended to inject a small amount of fuel after the primary fuel injection to continue the main combustion so as to warm the exhaust gas. In this case, similar to the case of increasing the preparatory fuel injection, it is also possible to inhibit the combustion noise from becoming worse. Furthermore, it is acceptable to combine the increment of the preparatory fuel injection, the split of the primary fuel injection and the application of the post fuel injection adequately.

The increment of the number of times of the fuel injection by the fuel injection unit of the present invention may be the one by which the number of times of fuel injection contributing to the combustion in the combustion chamber is increased, and it is not limited to the above descriptions including the embodiment.

## Claims

1. A control device for an internal combustion engine, comprising:
an exhaust gas recirculation mechanism configured to recirculate exhaust gas to an intake air system of the internal combustion engine;
a fuel injection unit configured to inject fuel into a combustion chamber of the internal combustion engine;
a fuel injection controller configured to control the fuel injection performed by the fuel injection unit; and
an exhaust gas recirculation stop unit configured to stop the operation of the exhaust gas recirculation mechanism when an idling operation of the internal combustion engine continues for a predefined time,
when the exhaust gas recirculation stop unit has stopped the operation of the exhaust gas recirculation mechanism, the fuel injection controller increases the number of times for appying the fuel injection performed by the fuel injection unit.

2. The control device for the internal combustion engine according to claim 1, when the exhaust gas recirculation stop unit has stopped the operation of the exhaust gas recirculation mechanism, the fuel injection controller applies a preparatory fuel injection performed by the fuel injection unit before a primary fuel injection.

3. The control device for the internal combustion engine according to claim 1 or 2, when the exhaust gas recirculation stop unit has stopped the operation of the exhaust gas recirculation mechanism, the fuel injection controller splits the primary fuel injection performed by the fuel injection unit.

4. The control device for the internal combustion engine according to any of claims 1 to 3, when the exhaust gas recirculation stop unit has stopped the operation of the exhaust gas recirculation mechanism, the fuel injection controller applies a post fuel injection performed by the fuel injection unit after the primary fuel injection.

5. A control method for an internal combustion engine which is provided with an exhaust gas recirculation mechanism configured to recirculate exhaust gas to an intake air system of the internal combustion engine; a fuel injection unit configured to inject fuel into a combustion chamber of the internal combustion engine; and an exhaust gas recirculation stop unit configured to stop the operation of the exhaust gas recirculation mechanism when an idling operation of the internal combustion engine continues for a predefined time,
when the exhaust gas recirculation stop unit has stopped the operation of the exhaust gas recirculation mechanism, the number of times for appying the fuel injection performed by the fuel injection unit is increased.

6. The control method for the internal combustion engine according to claim 5, when the exhaust gas recirculation stop unit has stopped the operation of the exhaust gas recirculation mechanism, the fuel injection unit applies a preparatory fuel injection performed by the fuel injection unit before a primary fuel injection.

7. The control method for the internal combustion engine according to claim 5 or 6, when the exhaust gas recirculation stop unit has stopped the operation of the exhaust gas recirculation mechanism, the fuel injection unit splits the primary fuel injection performed by the fuel injection unit.

8. The control method for the internal combustion engine according to any of claims 5 to 7, when the exhaust gas recirculation stop unit has stopped the operation of the exhaust gas recirculation mechanism, the fuel injection unit applies a post fuel injection performed by the fuel injection unit after the primary fuel injection.

## Patentansprüche

1. Steuer-/Regeleinrichtung für einen Verbrennungsmotor, umfassend:
einen Abgasrückführungsmechanismus, welcher dazu konfiguriert ist, Abgas zu einem Lufteinlasssystem von dem Verbrennungsmotor zurückzuführen;
eine Kraftstoffeinspritzeinheit, welche dazu konfiguriert ist, Kraftstoff in einen Brennraum von dem Verbrennungsmotor einzuspritzen;
eine Kraftstoffeinspritzsteuer-/regeleinrichtung, welche dazu konfiguriert ist, die von der Kraftstoffeinspritzeinheit durchgeführte Kraftstoffeinspritzung zu steuern/regeln; und
eine Abgasrückführung-Stopp-Einheit, welche dazu konfiguriert ist, den Betrieb von dem Abgasrückführungsmechanismus zu stoppen, wenn ein Leerlaufbetrieb des Verbrennungsmotors für eine vorherbestimmte Zeit andauert,
wobei dann, wenn die Abgasrückführung-Stopp-Einheit den Betrieb von dem Abgasrückführungsmechanismus gestoppt hat, die Kraftstoffeinspritzsteuer-/regeleinrichtung die Anzahl von Anwendungen der Kraftstoffeinspritzung erhöht, welche von der Kraftstoffeinspritzeinheit durchgeführt wird.

2. Steuer-/Regeleinrichtung für den Verbrennungsmotor nach Anspruch 1, wobei dann, wenn die Abgasrückführung-Stopp-Einheit den Betrieb von dem Abgasrückführungsmechanismus gestoppt hat, die Kraftstoffeinspritzsteuer-/regeleinrichtung eine Kraftstoff-Voreinspritzung anwendet, welche von der Kraftstoffeinspritzeinheit vor einer Kraftstoff-Haupteinspritzung durchgeführt wird.

3. Steuer-/Regeleinrichtung für den Verbrennungsmotor nach Anspruch 1 oder 2, wobei dann, wenn die Abgasrückführung-Stopp-Einheit den Betrieb von dem Abgasrückführungsmechanismus gestoppt hat, die Kraftstoffeinspritzsteuer-/regeleinrichtung die von der Kraftstoffeinspritzeinheit durchgeführte Kraftstoff-Haupteinspritzung aufteilt.

4. Steuer-/Regeleinrichtung für den Verbrennungsmotor nach einem der Ansprüche 1 bis 3, wobei dann, wenn die Abgasrückführung-Stopp-Einheit den Betrieb von dem Abgasrückführungsmechanismus gestoppt hat, die Kraftstoffeinspritzsteuer-/regeleinrichtung eine Kraftstoff-Nacheinspritzung anwendet, welche von der Kraftstoffeinspritzeinheit nach der Kraftstoff-Haupteinspritzung durchgeführt wird.

5. Steuer-/Regelverfahren für einen Verbrennungsmotor, welcher versehen ist mit einem Abgasrückführungsmechanismus, welcher dazu konfiguriert ist, Abgas zu einem Lufteinlasssystem von dem Verbrennungsmotor zurückzuführen; einer Kraftstoffeinspritzeinheit, welche dazu konfiguriert ist, Kraftstoff in einen Brennraum von dem Verbrennungsmotor einzuspritzen; und einer Abgasrückführung-Stopp-Einheit, welche dazu konfiguriert ist, den Betrieb von dem Abgasrückführungsmechanismus zu stoppen, wenn ein Leerlaufbetrieb des Verbrennungsmotors für eine vorherbestimmte Zeit andauert,
wobei dann, wenn die Abgasrückführung-Stopp-Einheit den Betrieb von dem Abgasrückführungsmechanismus gestoppt hat, die Anzahl von Anwendungen der Kraftstoffeinspritzung erhöht wird, welche von der Kraftstoffeinspritzeinheit durchgeführt wird.

6. Steuer-/Regelverfahren für den Verbrennungsmotor nach Anspruch 5, wobei dann, wenn die Abgasrückführung-Stopp-Einheit den Betrieb von dem Abgasrückführungsmechanismus gestoppt hat, die Kraftstoffeinspritzeinheit eine Kraftstoff-Voreinspritzung anwendet, welche von der Kraftstoffeinspritzeinheit vor einer Kraftstoff-Haupteinspritzung durchgeführt wird.

7. Steuer-/Regelverfahren für den Verbrennungsmotor nach Anspruch 5 oder 6, wobei dann, wenn die Abgasrückführung-Stopp-Einheit den Betrieb von dem Abgasrückführungsmechanismus gestoppt hat, die Kraftstoffeinspritzeinheit die von der Kraftstoffeinspritzeinheit durchgeführte Kraftstoff-Haupteinspritzung aufteilt.

8. Steuer-/Regelverfahren für den Verbrennungsmotor nach einem der Ansprüche 5 bis 7, wobei dann, wenn die Abgasrückführung-Stopp-Einheit den Betrieb von dem Abgasrückführungsmechanismus gestoppt hat, die Kraftstoffeinspritzeinheit eine Kraftstoff-Nacheinspritzung anwendet, welche von der Kraftstoffeinspritzeinheit nach der Kraftstoff-Haupteinspritzung durchgeführt wird.

## Revendications

1. Un dispositif de commande pour un moteur à combustion interne, comprenant : un mécanisme de recirculation des gaz d'échappement configuré pour faire recirculer les gaz d'échappement vers un système d'air d'admission du moteur à combustion interne ;
une unité d'injection de carburant configurée pour injecter du carburant dans une chambre de combustion du moteur à combustion interne ;
un régulateur d'injection de carburant configuré pour régler l'injection de carburant effectuée par l'unité d'injection de carburant ; et
une unité d'interruption de recirculation des gaz d'échappement configurée pour arrêter le fonctionnement du mécanisme de recirculation des gaz d'échappement lorsqu'un fonctionnement au ralenti du moteur à combustion interne se poursuit pendant une période de temps préalablement déterminée,
lorsque l'unité d'arrêt de recirculation des gaz d'échappement a arrêté le fonctionnement du mécanisme de recirculation des gaz d'échappement, le régulateur d'injection de carburant augmente le nombre de fois pour appliquer l'injection de carburant effectuée par l'unité d'injection de carburant.

2. Le dispositif de commande pour le moteur à combustion interne selon la revendication 1, lorsque l'unité d'arrêt de recirculation des gaz d'échappement a arrêté le fonctionnement du mécanisme de recirculation des gaz d'échappement, le régulateur d'injection de carburant applique une injection préparatoire de carburant effectuée par l'unité d'injection de carburant avant une injection primaire de carburant.

3. Le dispositif de commande pour le moteur à combustion interne selon l'une des revendications 1 ou 2, lorsque l'unité d'arrêt de recirculation des gaz d'échappement a arrêté le fonctionnement du mécanisme de recirculation des gaz d'échappement, le régulateur d'injection de carburant scinde l'injection primaire de carburant effectuée par l'unité d'injection de carburant.

4. Le dispositif de commande pour le moteur à combustion interne selon l'une des revendications 1 à 3 lorsque l'unité d'arrêt de recirculation des gaz d'échappement a arrêté le fonctionnement du mécanisme de recirculation des gaz d'échappement, le régulateur d'injection de carburant applique une post-injection de carburant effectuée par l'unité d'injection de carburant après l'injection primaire de carburant.

5. Un procédé de commande d'un moteur à combustion interne qui est doté d'un mécanisme de recirculation des gaz d'échappement configuré pour faire recirculer les gaz d'échappement vers un système d'air d'admission du moteur à combustion interne ; une unité d'injection de carburant configurée pour injecter du carburant dans une chambre de combustion du moteur à combustion interne ; et une unité d'interruption de recirculation des gaz d'échappement configurée pour arrêter le fonctionnement du mécanisme de recirculation des gaz d'échappement lorsqu'un fonctionnement au ralenti du moteur à combustion interne se poursuit pendant une période de temps préalablement déterminée,
lorsque l'unité d'arrêt de recirculation des gaz d'échappement a arrêté le fonctionnement du mécanisme de recirculation des gaz d'échappement, le nombre de fois pour appliquer l'injection de carburant effectuée par l'unité d'injection de carburant est augmenté.

6. Le procédé de commande pour le moteur à combustion interne selon la revendication 5, lorsque l'unité d'arrêt de recirculation des gaz d'échappement a arrêté le fonctionnement du mécanisme de recirculation des gaz d'échappement, le régulateur d'injection de carburant applique une injection préparatoire de carburant effectuée par l'unité d'injection de carburant avant une injection primaire de carburant.

7. Le procédé de commande pour le moteur à combustion interne selon l'une des revendications 5 ou 6, lorsque l'unité d'arrêt de recirculation des gaz d'échappement a arrêté le fonctionnement du mécanisme de recirculation des gaz d'échappement, le régulateur d'injection de carburant scinde l'injection primaire de carburant effectuée par l'unité d'injection de carburant.

8. Le procédé de commande pour le moteur à combustion interne selon l'une des revendications 5 à 7 lorsque l'unité d'arrêt de recirculation des gaz d'échappement a arrêté le fonctionnement du mécanisme de recirculation des gaz d'échappement, le régulateur d'injection de carburant applique une post-injection de carburant effectuée par l'unité d'injection de carburant après l'injection primaire de carburant.
